# EUROPEAN PATENT APPLICATION

(11) **EP 2 378 407 A1**
(43) Date of publication of application: **19.10.2011**
(21) Application number: 11172206.2
(22) Date of filing: 11.07.2005
(51) Int. Cl.: G06F 3/048, H04M 1/725

(54) **Cute user interface**

(30) Priority: 09.07.2004 US 586855 P
(62) Divisional of application: 05772634.1
(71) Applicant: NOKIA CORPORATION, 02150 Espoo (FI)
(72) Inventor: Aaltonen, Antti, 33680 Tampere (FI); Stovicek, Thomas, 02150 Espoo (FI); Baudet, Giles, 00180 Helsinki (FI)
(74) Representative: Venner Shipley LLP

(57) **Abstract**

A method for navigating information in a mobile terminal. The method includes displaying, on a graphical user interface of the mobile terminal, a plurality of window regions, wherein each region is a container for objects and provides an overview of contents of the terminal and a status of the terminal. Receiving a first user input to make a selection of one of the regions and in response to the first user input, displaying at least one object corresponding to a selected region in a central portion of the graphical user interface and displaying other non-selected regions that have a relationship to the selected region in a secondary manner. At least one management tool for accessing information related to the selected region is displayed and, upon activation of the at least one management tool, the information selected is displayed.

## Description

The present invention is generally related to the field of graphical user interfaces. In particular, the disclosed embodiments are related to a user interface for a mobile computing device.

A graphical user interface generally provides a means by which a user can control a device, such as for example a computing system or a mobile telephone.

A goal of software producers is not only to produce a great source code that operates without error, but also to produce a product with which the consumer interacts with satisfaction, quickly and easily. Graphical user interfaces, including icons, cursors, windows, and menus, have always played large parts in elevating the user's ease of interaction with the software program.

Traditional menu systems arrange a list of selections in a top-to-bottom linear configuration. The user typically uses the keyboard or mouse to point out and select a desired menu item. Popular selections are frequently placed at the top of the menu, with a descending order of usage for the remaining items. However, when a list of menu items becomes long, it becomes difficult for the average user to quickly review the list and even more difficult to recall from prior selections the exact content and positions of menu items. Prior art systems break the list into multiple smaller lists. In some cases, the lists are organized by general menu headings. Upon selection of a specific general heading, an additional menu list referred to as a "child menu" or a sub-menu becomes visible on the user's screen. Usually the second list represents more specific items within the general menu headings and partially overlaps the originally selected menu item.

Problems with linear list menus are many. First of all, people are generally bad with lists. A grocery list is good for a few items, however as the list becomes longer, the first few items are remembered, with the lower items being forgotten. As the list becomes longer, the case of memory recall becomes increasingly more difficult. When selecting items from a long list, the bottom items require traversal of the list from top-to-bottom, therefore creating a distance and consequentially time delay effect on menu selections. What is needed is a distance and time invariant arrangement.

One popular type of graphical user interface ("GUI") display is based on a visual metaphor which defines a monitor screen to be a workspace known as a "desktop", in which the contents of files and documents are presented in relocatable regions known as "windows". In addition to windows, the graphical user interface typically includes icons that represent various objects in a computer system. In this context, the term "object" refers to any software entity that exists in the memory of the computer and constitutes a specimen of a particular class. For example, an object can be a data file, which contains the contents of a document. It can also be an application program or other type of service provider, such as a hardware driver. An object can also be a container for other objects, such as a folder or a window.

One of the advantages offered by the graphical user interface, in terms of making the computer easier to use, is the ability for the user to directly and effortlessly manipulate objects of interest by moving, or otherwise acting upon, their icon representations. For example, a graphical user interface typically includes a cursor, or a similar type of pointing and selection device, that is controlled by the user to select objects. By actuating a button or key while the cursor is positioned over an icon, for example by clicking a mouse button, the user can select the object to perform an action upon it. If the icon represents an application program, the action might be to launch the program. If the icon represents a data file, the action might cause the file to be opened within the application program that was used to create it. Alternatively, the file can be copied, moved into a folder, deleted, or the like.

A content driven mobile application framework for a user interface can include a platform 100 based on personal content life cycle. The applications can allow users to collect information, collaborate together and connect and communicate. The use of media allows users to get information, enjoy information, maintain information and share information. Other themes related to user interfaces include scaleable user interfaces and scalable vector graphics (SVG), zoomable user interfaces and user interface description languages, such as for example, extended mark-up language ("XML").

In one aspect, the present invention is directed to a method for navigating information in a mobile terminal. In one embodiment the method includes displaying, on a graphical user interface of the mobile terminal, a plurality of window regions, wherein each region is a container for objects and provides an overview of contents of the terminal and a status of the terminal. Receiving a first user input to make a selection of one of the regions and in response to the first user input, displaying at least one object corresponding to a selected region as the predominant object displayed on the graphical user interface and displaying other non-selected regions that have a relationship to the selected region in a secondary manner. At least one management tool for accessing information related to the selected region is displayed and, upon activation of the at least one management tool, the information selected is displayed.

The method of may further comprise selecting a region of the user interface that allows the user to access at least one application stored in the terminal and displaying a window on the user interface that provides functionality of the at least one application. The method may further comprise displaying on the user interface, in a secondary fashion to the window corresponding to the selected region, at least one window corresponding to a non-selected region that is related to the selected region, the at least one window corresponding to the non-selected region providing the user with a functionality of the non-selected region. The non-selected regions that have a relationship to the selected region may include a region providing a contact list, a region providing calendar services and a region providing proximity and physical location of contacts from the contact list.

The at least one region may include a region that provides a user of the terminal access to program applications and content files stored in the terminal. The region that provides a user of the terminal access to program applications and content files may have a secondary relation with a contact list stored in the terminal, a calendaring services function of the terminal and proximity and location services, objects for each of which are secondarily displayed on the graphical user interface when the content of the program application is primarily displayed.

The method may further comprise selecting one of the secondary objects, wherein the selected secondary object replaces the predominant object on the graphical user interface as a new predominant object.

The method may further comprise, highlighting, in each non-selected region displayed in a secondary manner, a function of the non-selected region that has a relationship to a function selected in the predominant region.

The method may further comprise: in response to the selection of one of the regions, the selected region presents the user with one or more utility applications of the phone; and selecting a utility application from the one or more utility applications; presenting functionality and control features of the selected utility application on the display, wherein the user can access the control features to allow the user to control the utility application and functionality of the phone. The selected utility application may be a camera function of the mobile terminal and the user can utilize and control the camera function via the control features presented on the display.

In another aspect the present invention is directed to a method for providing and accessing menu functions on a display of an electronic device. In one embodiment the method comprises providing on the display, one or more menu functions in a menu structure where the menu structure includes a primary object and at least one secondary object. Upon selection of one of the menu functions, the selected menu function is reformatted to be displayed as the primary object on the display. It is determined which of non-selected menu functions have a relationship with the selected menu function, and those menu functions or object regions are reformatting to be displayed as secondary objects relative to the primary object on the display.

The method may further comprise the primary object being displayed over a larger area of the display relative to the secondary objects.

The method may further comprise selecting one of the secondary objects, wherein the selected secondary object is resized and repositioned to become a new primary object on the display and remaining non-selected objects that have a relationship with the new primary object being resized and repositioned are displayed as the secondary objects on the display.

The method may further comprise, highlighting, in each secondary object, at least one item that has a relationship with an item of the primary object.

The method may further comprise selecting an item displayed in the primary object and highlighting in one of the secondary objects, at least one item that has a relationship with the selected item in the primary object.

The primary object may be a calendar function and one of the secondary objects may be a contact list, and upon selecting an appointment in the calendar function, at least one corresponding contact in the contact list related to the appointment may be highlighted.

Reformatting the selected menu function may comprise resizing the selected function to appear larger in viewing area on the display relative to secondary objects.

The method may further comprise displaying, during an idle state, on the graphical user interface: an environment region as an initial primary object; a contact list region as one of the secondary regions when the environment region is the initial primary object; a content object as one of the secondary regions when the environment region is the initial primary object; a calendar object as one of the secondary regions when the environment region is the initial primary object; and an applications object as one of the secondary regions when the environment region is the initial primary object. The method may further comprise: highlighting at least one contact in the contact list when at least one contact is in a proximity of the terminal device; and displaying, in the environment region, an identifier of the at least one contact in proximity of the terminal device together with a distance that the at least one contact in proximity of the terminal device is from the terminal device. The method may further comprise: selecting the contact region to be a next primary object; repositioning the contact region as the next primary object; repositioning the environment object as one of the secondary objects, wherein the environment object occupies an area previously occupied by the applications area; and displaying, in the content region, a gallery of content of the terminal device and at least one content creation application. The method may further comprise: selecting an image from the gallery of content; highlighting in the contact list, at least one contact that has a relationship with the selected image; and wherein selecting the highlighted contact can activate a communication link with the highlighted contact. The method may further comprise: selecting an image from the gallery of content; highlighting in the calendaring object time and date information related to the selected image.

The method may further comprise: selecting the contact list to be a next primary object; repositioning the contact list from one of the secondary objects to the next primary object; and repositioning the environment object to be one of the secondary objects by displacing a region occupied by the applications object.

The method may further comprise: selecting the calendar object as a next primary object; replacing the environment region as the primary object with the calendar object; moving the environment region into an area occupied by the applications object to become one of the secondary regions. The method may further comprise: selecting an appointment displayed in the calendar object; highlighting at least one contact in the contact list region that has a relationship with the selected appointment; and selecting the at least one contact in the contact list region to establish a communication gateway with the selected at least one contact. The method may further comprise displaying, in the environment region, proximity information related to at least one contact from the contact list region, and wherein selecting one of a displayed contact identifier in the environment region will cause the corresponding contact identifier in the contact list region to be highlighted.

The method may further comprise: using a five-position navigating device to navigate and select among the primary object and at least one secondary object; and adapting a functionality of each selection position of the navigating device to correspond to a content of a current primary object being displayed.

The method may further comprise providing, in the environment region, information that a content-related object is available to the terminal device. The method may further comprise providing an icon in the environment region representing the information that a content-related object is available, wherein upon selection of the icon, an action related to the content-related object is automatically performed.

In a further aspect, the present invention is directed to a graphical user interface for a terminal device. In one embodiment the graphical user interface includes a display screen, a user input device, and a processor arranged to display information on the display screen. The information generally includes a plurality of regions, each region providing information related to a contents of the terminal and a status of the terminal. The processor is also arranged to display a primary region and at least one secondary region. The primary region is displayed in a more predominant manner on the graphical user interface than the at least one secondary region.

The plurality of regions may comprise: a region with information related to proximity, context, available services and indicators; a region presenting an available content of the terminal; a region presenting a calendaring function; a region presenting contacts; and a region presenting applications stored in the terminal.

The graphical user interface may further comprise a size of the primary region being larger relative to a size of the at least one secondary region.

The graphical user interface may further comprise a position of the primary region being located in a central portion of the graphical user interface and a position of the at least one secondary region being in a border area of the graphical user interface.

The graphical user interface may further comprise: a first icon representing the primary region, the first icon being in a form of a first geometric shape; and at least one second icon representing the at least one secondary region, the second icon being in a form of a second geometric shape. The second geometric shape may comprise a portion of the first geometric shape.

At least one secondary region may have a relationship with the primary region, and an indicator of the relationship may comprise at least one highlighted portion of the at least one secondary region.

The graphical user interface may further comprise a idle state display of the graphical user interface comprising: a primary region comprising an object including proximity and context services; a first secondary region comprising an object including an application content and utility functions available in the terminal device; a second secondary region comprising an object including a contact list; a third secondary region comprising an object including third-party applications available in the terminal device; and a fourth secondary region comprising an object including calendaring services available in the terminal device.

In another aspect, the present invention is directed to a computer program product. In one embodiment the computer program product includes a computer useable medium having computer readable code means embodied therein for causing a computer to generate a user interface for a terminal device. The computer readable code means in the computer program product can include computer readable program code means for causing a computer to generate a background region and a plurality of window regions; computer readable program code means for causing a computer to arrange the plurality of window regions as a primary region and a plurality of secondary regions; computer readable program code means for causing a computer to display in the primary region during an idle state of the terminal device, an object including information pertaining to location services, proximity and context; computer readable program code means for causing a computer to present, in a first of the secondary regions, information pertaining to a content of the terminal device; computer readable program code means for causing a computer to present, in a second of the secondary regions, a calendaring function of the terminal device; computer readable program code means for causing a computer to present, in a third of the secondary regions, information pertaining to contacts stored in the terminal device; and computer readable program code means for causing a computer to present, in a fourth of the secondary regions, information pertaining to non-content related applications stored in the terminal device.

The computer program product may further comprise: computer readable program code means for causing a computer to present a functionality of one of the plurality of secondary region as a new primary region in response to a user input selecting of one of the plurality of secondary regions; and computer readable program code means for causing a computer to present, after selection of the new primary region, non-selected regions that have a relationship with the new primary region as the plurality of secondary regions. The computer program product may further comprise: computer readable program code means for causing a computer to filter out non-selected regions that do not have a relationship with the new primary region.

The computer program product may further comprise: computer readable program code means for causing a computer to determine a size of a display area of the terminal device and automatically scale the background region and the plurality of window regions to fit the size of the display area.

The computer program product may further comprise computer readable program code means for causing a computer to determine an object level of detail depending on an available screen size of the terminal device.

The computer program product may further comprise computer readable program code means for causing a computer to, in response to the user input selecting one of the plurality of secondary regions, reformat a size of the selected one of the plurality of secondary regions to be larger in size than other secondary regions and reformat a size of the primary region to a size of the secondary regions. The computer program product may further comprise computer readable program code means for causing a computer to, upon selection of the first of the secondary regions, allow a user to select a function of the terminal device and display user manipulatable controls related to the selected function. The computer program product may further comprise computer readable program code means for causing a computer to select a camera function of the terminal device and capture an image using the camera. The computer program product may further comprise computer readable program code means for causing a computer to allow the user to select at least one contact from the third region with whom to immediately share the captured image. The computer program product may further comprise computer readable program code means for causing a computer to allow the user to select an option from the second region in order to effect a time image capture. The computer program product may further comprise computer readable program code means for causing a computer to allow the user to select an option from the second region an create a calendar event that includes the captured image. The computer program product may further comprise computer readable program code means for causing a computer to allow the user to select an option from the second region that will attach the captured image to an existing scheduled event displayed in the second region.

In one more aspect, the present invention is directed to a method for providing a graphical user interface for a terminal device. In one embodiment the method includes providing on a display of the terminal device a plurality of objects, one of the objects comprising a primary object and a remainder comprising secondary objects. The primary object is generally displayed as a predominant object in comparison to the secondary objects. The initial primary object is generally an environments region that provides proximity services, context services, and indicators for available content and service. The secondary objects being displayed generally include a content region that presents an available content of the terminal device including a gallery of content of the terminal device and at least one content creation application, a contact region that provides a contact list, a calendaring region that provides calendar, task and appointment services, and an applications region that identifies third-party applications stored in the terminal device. When a contact from the contact list is within a certain proximity to the terminal device, a contact identifier for the contact and a proximity of the contact from the terminal device can be displayed in the environment region. When a task from the calendaring region is selected, one or more contacts related to the task can be highlighted in the contact list. Upon selection of the highlighted one or more contacts in the contact list, a communication pathway is established with the one or more contacts.

The method may further comprise: selecting the content region to be a next primary object; moving the environment region as the initial primary object to a secondary object position of the applications region; selecting a content creation application from the content region; displaying at least one control related to the content creation application that allows content to be created using the application. The method may further comprise: capturing an image using the content creation application; displaying the image; and selecting at least one contact from the contact list with whom the image is to be shared, wherein selection of the at least one contact automatically opens a communication pathway and causes the image to be transmitted to the at least one contact.

The method may further comprise: selecting the content region to be a next primary object; moving the environment region as the initial primary object to a secondary object position of the applications region; selecting at least one content from the gallery of content in the content region that allows the at least one content and information related to the at least one content to be view and edited; highlighting in the contact region at least one contact that is related to the at least one content selected.

The foregoing aspects and other features of the present invention are explained in the following description, taken in connection with the accompanying drawings, wherein:
FIG. 1 is a block diagram of one embodiment of an electronic device incorporating features of the present invention.
FIG. 2 is a schematic diagram of one embodiment a user interface incorporating features of the present invention.
FIG. 3A is a functional block diagram of one embodiment of a mobile device incorporating features of the present invention.
FIG. 3B is an illustration of one embodiment of a device that includes a user interface incorporating features of the present invention.
FIG. 3C is an illustration of interaction with one embodiment of a user interface incorporating features of the present invention.
FIG. 4 is a visual illustration of one embodiment of features and functions of a content region of a user interface incorporating features of the present invention.
FIG. 5 is a visual illustration of one embodiment of features and functions of a user's region of a user interface incorporating features of the present invention.
FIG. 6 is a visual illustration of one embodiment of features and functions of a task's region of a user interface incorporating features of the present invention.
FIG. 7 is a visual illustration of one embodiment of features and functions of an environment region of a user interface incorporating features of the present invention.
FIGS. 8a-8c are illustrations of one method of navigating with one embodiment of a user interface incorporating features of the present invention.
FIG. 9 is a visual illustration of one embodiment of a user interface incorporating features of the present invention.
FIG. 10 is an illustration of another embodiment of an object layout in a user interface incorporating features of the present invention.
FIG. 11 is an illustration of one embodiment of an icon arrangement in a Content region of a user interface incorporating features of the present invention.
FIG. 12 is an illustration of scaling a user interface incorporating features of the present invention.
FIG. 13 is a block diagram of one embodiment of an architecture that can be used to practice the present invention.
FIG. 14 is a visual illustration of one embodiment of features and functions of a Content region of a user interface incorporating features of the present invention.
FIG. 15 is a visual illustration of one embodiment of features and functions of a camera application region of a user interface incorporating features of the present invention.
FIG. 16 is a visual illustration of one embodiment of features and functions of a Contacts region of a user interface incorporating features of the present invention.
FIG. 17 is a visual illustration of one embodiment of features and functions of an applications region of a user interface incorporating features of the present invention.
FIG. 18 is a visual illustration of one embodiment of features and functions of a web browser application a user interface incorporating features of the present invention.

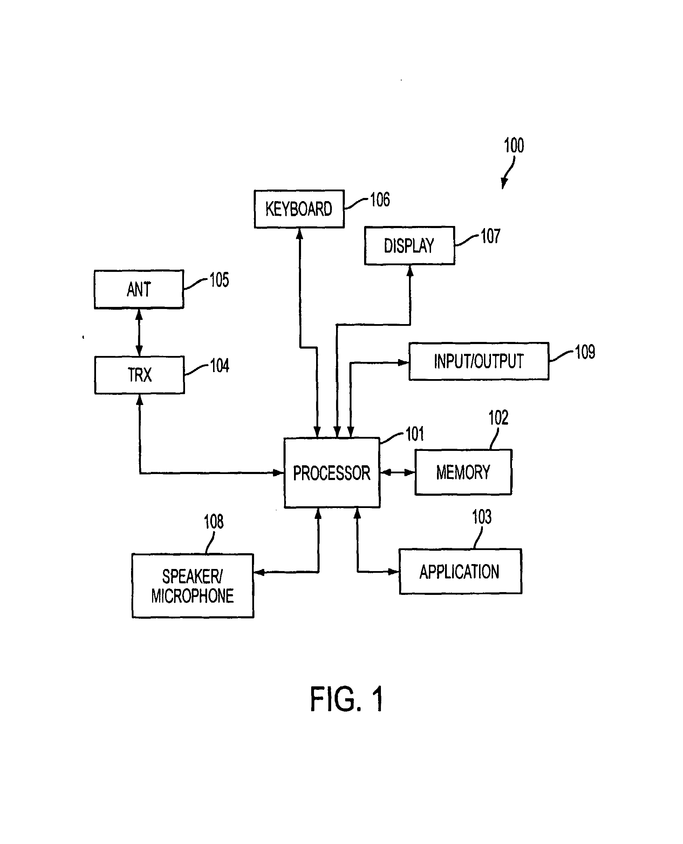

Referring to Fig. 1, a schematic diagram of a system 100 incorporating features of the present invention is illustrated. Although the present invention will be described with reference to the embodiment shown in the drawings, it should be understood that the present invention can be embodied in many alternate forms of embodiments. In addition, any suitable size, shape or type of elements or materials could be used.

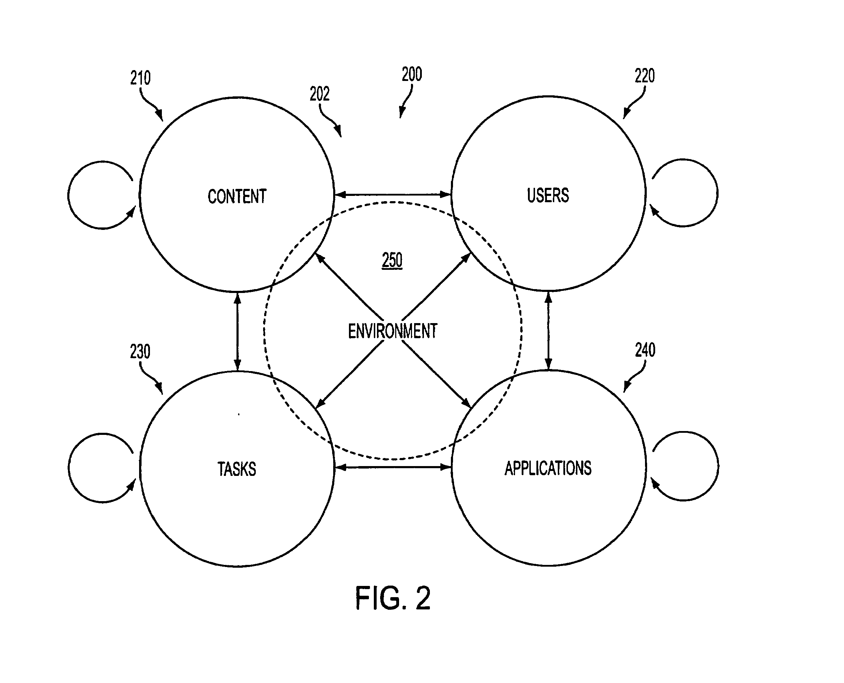

Referring to FIG. 2, the present invention is generally directed to a user interface 200 that is designed for content and task driven mobile terminals. As shown in FIG. 2, the user interface 200 generally comprises a plurality of window regions, 210-250. FIG. 2 illustrates a visual arrangement of a menu structure of a user interface according to one embodiment of the invention. Although five window regions are shown in FIG. 2, it will be understood that the scope of the invention can include any suitable number of window regions.

As shown in FIG. 2, each region 210-240 is a circular region that intersects with region 250 to indicate a relationship. In alternate embodiments, any suitable arrangement or geometric shapes can be utilized and the regions do not need to intersect. The user interface layout 200 can depend on the user interface description file and the I/O capabilities. These can be context sensitive and the containers shape, size and other properties are defined in the user interface description file.

As shown in FIG. 2, the present invention also includes a background section 202. At least one function symbol or other identifier can be located in each of the regions 210-240 to identify a function or content. The regions are generally defined as "Content" 210, "Users" 220, "Tasks" 230, "Environment" 250 and "Applications" 240. The terms are merely exemplary, and the scope of the invention is not limited to these terms or the functionality they provide. The user interface 200 generally provides an overview of the terminal, or mobile device, and its contents and status. This arrangement is suitable for use with a controller device having navigating buttons, such as for example a rocker switch that can navigate to and between the menu items, or directions, such as for example a joystick that can move a cursor in more than one direction. The user is able to provide an input to the user interface by using a controller device such as a rocker switch controller or a joystick having several optional directions to be moved. In alternate embodiments, the user is able to provide inputs by using voice commands or by using a touch sensitive display of the device or other known input means. If the user makes a selection of one of the regions 210-240, the device executes a task relating to that selection executing at least one function related to that selection.

FIGS. 2, 7 and 9 generally illustrate what will be referred to herein as the main screen or "idle state" of the user interface of the present invention. Referring to FIG. 2, the "idle state" generally comprises a Content area 210, a Users area 220, a Tasks area 230, an Applications area 240 and an Environment area 250. The content area 210 generally provides a gallery and content creation area. Personal content of the terminal device can be accessed in several views that can be based on metadata, such as for example, a file name, the creator, location of creation or age related information. The Content area 210 can also provide tools for creating, managing and editing personal content. These tools can comprise for example a camera; drawing pad; file and WWW browser; or text viewer; or image viewer or editor.

The Users area 220 generally provides the user with a contact list and different ways to communicate with contacts on the list, which can include rich call, chat and messaging. The User's area 220 can also include a phone book and presence information, for example. The Tasks area 230 generally provides calendar services for current and future events/tasks including a to-do list, journal and a call log for example. The Tasks area can also be used to display context events and active applications in the terminal. The Applications area 240 in the idle state displays applications not related to any content in the terminal and other third party-applications. The applications area 240, if selected and activated, will provide the user with access to the applications stored in the terminal.

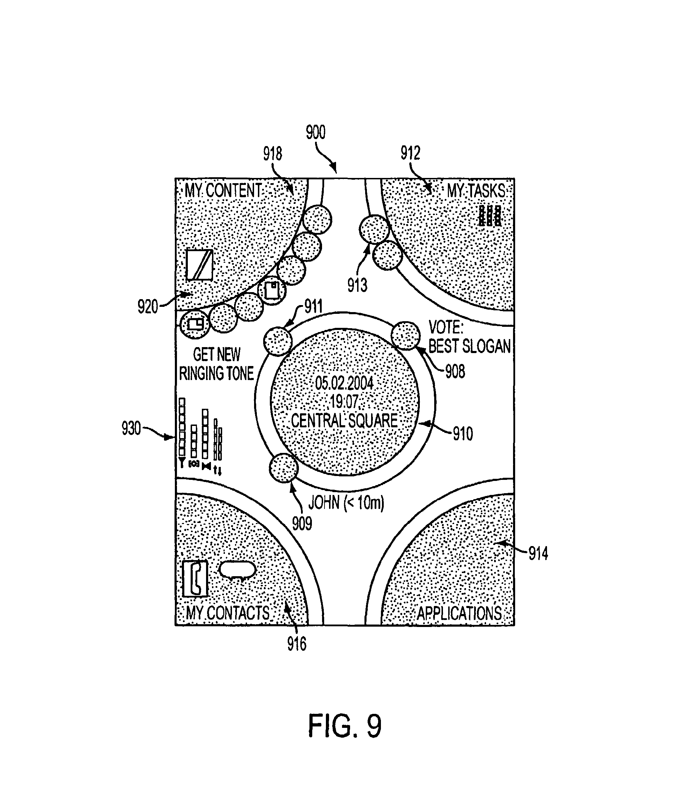

The Environment area 250 is generally displayed in a central portion of the user interface while the user interface is in the idle mode. In the idle mode, the environment area 250 generally displays context information, location-based services or proximity services. As shown in FIG. 9, for example, in one embodiment, time, date and location information are displayed, together with for example an indication of a nearby contact "(John (< 10m)", or some other such message. For example, an action item can be displayed, such as the "vote: Best slogan" icon 908, which allows the user to respond for some purpose. In addition, in FIG. 9, availability of location-based service for downloading new ringing tone ("Get new ringing tone") 911 is displayed. Thus, in the idle state, the user interface of the present invention at least provides an overview of the terminal contents and its status, a visualization of the personal content stored in the terminal, proximity and context information, awareness of persons and events of interest and the relationship between different objects present on the user interface. As shown in FIG. 2, each region 210-250 can have a direct or indirect relation with another region.

The user interface is provided on a display of an electronic device, such as for example, a portable terminal device like a mobile telephone. FIG. 1 illustrates a block diagram of one embodiment of an electronic device 100 incorporating features of the present invention. The device 100 can be a wireless terminal device operating in a communication system such as for example, a GSM, GPRS, UMTS or Bluetooth system. The electronic device can also be for example a hand-held, portable or desktop computer or a game device or console, or a personal digital assistant ("PDA"). In alternate embodiments, the user interface of the present invention can be implemented on any content and task driven electronic device. The device 100 generally comprises a processor 101 and a memory 102 for operating tasks of the device 100 and for running applications stored in the device. For operating in a communications system, the device can include a transceiver 104 and an antenna 105. For data input, the device 100 can include a keyboard 106, which can be a soft key keyboard or touch sensitive area on a surface of the device providing visual symbols or other indicators for the user to select by touching the symbol. The device 100 can also include other input means, such as for example a joystick, a rocker switch controller, a touch sensitive display or voice command ability. For data output, the device 100 includes a display 107 that can be a monochrome or color display, an LCD panel, a touch sensitive panel or other suitable display as well as vibration motors for tactile output. If the user wants to use the functions provided in the menu of the user interface, the user selects a region, such as for example "Content" 210 of FIG. 2 by moving a controller device in the appropriate direction, for example, by moving a joystick controller to the "up" direction or by pressing the appropriate, key, switch or soft key, if it is assumed to correspond. Another possibility is to tap the touch sensitive display on appropriate location. The user interface will then launch the "Content" application and the user can access the features of "Content" as will be described below.

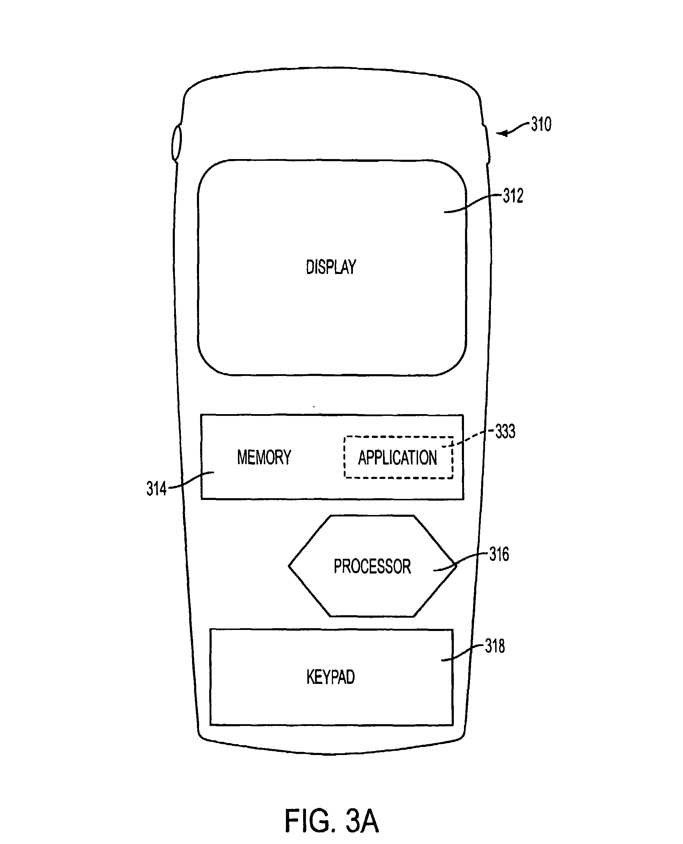

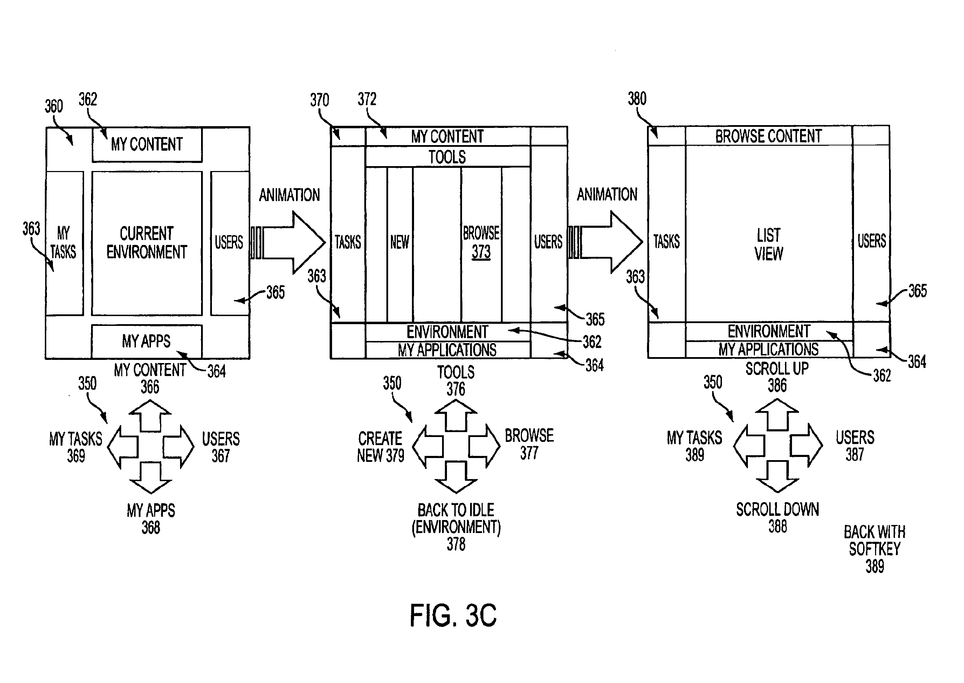

For example, referring to FIG. 3C, a five-way joystick 350 is illustrated as being used to navigate between the different windows of the user interface. Movement and positioning of the joystick 350 allows the user to choose between and select the different regions appearing on the user interface. These positions are generally identified on the joystick 350 as MY CONTENT 366, MY TASKS 369, MY APPS 368 and USERS 367. The different positions of the joystick 350 can be soft keys or buttons, the functionality of which changes and adapts to the particular window(s) displayed on the user interface at the time.

In the first window 360 of FIG. 3C, the joystick 350 is used to select the "MY CONTENT" region 362, which is selected by activation of the MY CONTENT key 366 of the joystick 350. The "MY CONTENT" application window 370 is then displayed on the user interface. As shown in FIG. 3C, the window 370 can have for example three sections, Tools 371, New 372 and Browse 373, each of which provides certain functionality related to the selected region. The window may be divided to as many sections as needed.

In secondary relationships, the Current Environment region 362, MY TASKS 363, MY APPLICATIONS 364 and USERS 365 are displayed surrounding the central area of the display 370, which is the "MY CONTENT" functional window 370.

The functionality of each position of the joystick 350 is adapted to correspond to the MY CONTENT window 370. The joystick 350 allows a user to select a Tools view 376 to select tools from window 371 related to the application(s) in the MY CONTENT region, a browse view 377 to browser applications in window 373 and/or files stored in the terminal device, a back to idle selection 378 which allows a user to revert the user interface to the original idle mode display 360 and a create new view selection 379 which allows a user to create new content from window 372, such as digital image, drawing, document, song, or game play session.

If the user activates the browse view selection 377, the Browse functionality appears as a window in display 380 and allows the user to browse any application or files stored in the terminal device. The browse view may display the applications and/or content by using a list, a grid or any other suitable method. The secondary windows 362-365 remain the same. The functionalities of the different positions of the joystick 350 can change or adapt to correspond to the layout of the window 380. Selections 386 and 388 for example, allow a user to navigate within the content (e.g. scroll up and down), selection 387 allows the user to move to the "USERS" application window, which is the displayed on the user interface. Selection 389 allows a user to move to the "TASKS" application window, which is then displayed as the primary window or region on the user interface. Selection 389 made with, e.g., the soft key, back to the previous screen 370 and the windows displayed thereon.

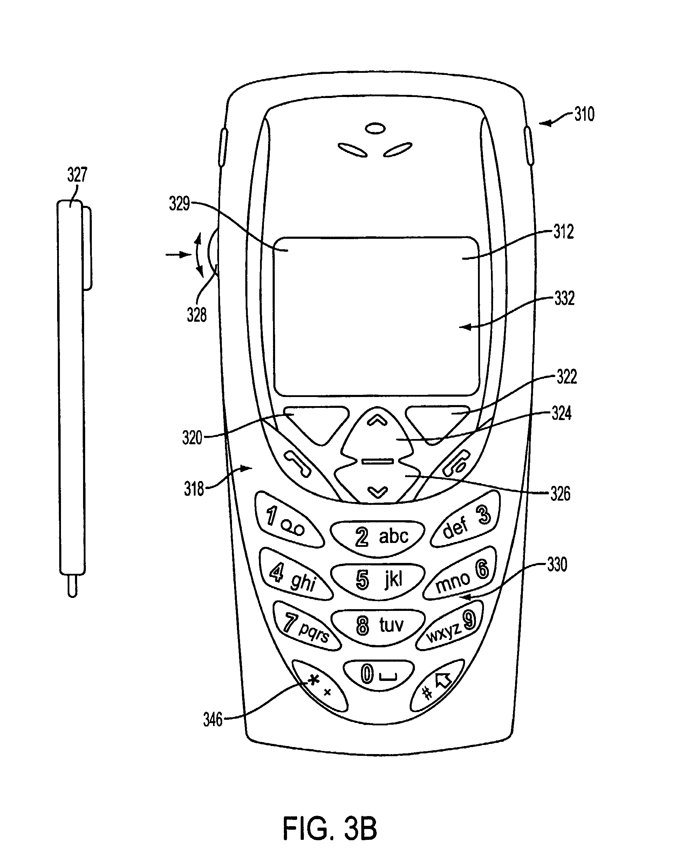

The invention may be embodied in various forms. One embodiment includes a mobile device, such as a personal digital assistant (PDA), mobile terminal, or the like, having a navigation display of an organizational model. The organizational model graphically represents features of a computer program for the device. As shown in FIGS. 3A and 3B, the mobile device 310 generally includes a display 312, a memory 314, a processor 316, and a keypad 318. The keypad may include a left movement button 320, a right movement button 322, an up arrow button 324, a down arrow button 326, an input wheel 328, and other input keys 330. The keys 320, 322, 324 and 326 could also comprise soft keys, the function of which adapts to the status of the user interface. The input wheel 328 can rotate for providing rotary inputs to the device and can be depressed as a whole, like a button, for providing selector inputs. In another embodiment, the input wheel is located on the keypad as a rotatable button that can be rotated clockwise and counterclockwise, as well as depressed as a whole.

The display 312 shows an organizational model 332 of a computer program 333 stored in the memory 314. The memory 314 also contains instructions for displaying the organizational model 332 and for navigating within the computer program 333 using the organizational model. A computer program as used herein may refer to any computer program within which an operator may navigate features of the program, such as operating systems, word processors, spreadsheets, email, telephone computer programs, games etc. In operation, the processor 316 processes the instructions in the memory 314 in accordance with the computer program 333 and receives inputs from the keypad 318 for modifying the view shown on the display 312 as is known in the art for graphical user interfaces (GUIs). The keypad 318, display 312 and processor 316 may be referred to collectively as a graphical user interface through which the user can interact with the device 310. The user navigates through the computer program and its features using the model 332 and the GUI.

The user interface 200 of FIG. 2 visualizes personal content stored in the terminal, displays proximity and content information (content, services and people), and provides awareness information about persons and events of interest and show relationships between different objects. Each region 210-240 is generally a container for objects.

The level of detail provided by each region 210-240 depends in part on the zoom level setting and the size and shape of the screen of the terminal. Each region 210-240 can provide the same high level features, such as for example, browse and search, create and tools for management.

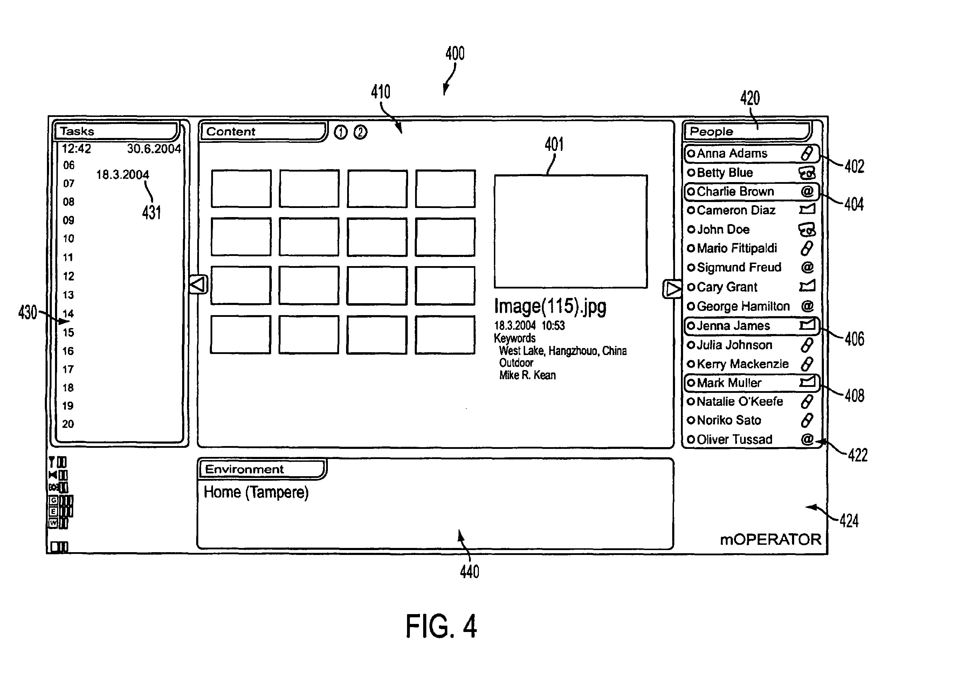

When an object(s) from a container 210-240 is highlighted, other related object(s) in other regions are highlighted as well, but in a secondary relationship to the selected object. For example, referring to FIGS. 2 and 4, the user has selected the Content region 210. The "Content" then becomes the main or primary window of the user interface as shown in FIG. 4. The main or primary window 410 is generally larger in size or view when compared to the secondary windows 420-440. The primary window 410 can be displayed in any location on the user interface and be of any suitable size or shape. Generally, the positioning, size or other highlighting (color, bold, shape) will identify the window 410 as the selected and primary window. Non-selected, secondary window regions 420-440 could be shaped or generally less conspicuous in comparison to the primary window 410. In addition to the "Browse Content" window 410, the secondary and related regions of "Users" 420, "Tasks" 430, and "Environment" 440 are shown along the periphery of the "Browse Content" 410. The functionality of each of these regions, 420, 430 and 440 is displayed, in addition to the features of the Content region 410. The secondary regions can display relationships between regions and objects and filter out objects that have no relation to the highlighted object. In one embodiment as shown in FIG. 4, the region 410 contains a collection of images and region 430 displays the date 431 (18.3.2004) when the images were created as well as small indicators about the creation time of each image. Similarly, region 420 displays secondary highlights 422, 424 for persons with whom the selected image is shared.

When an object in FIG. 2 is selected or activated, the selection can initiate an animated view transition, such as for example, an animated view transition (zoom, pan, etc.). The animated view transition can be a navigation step, or application launch or a probe for displaying detailed information about the selected object.

Referring to FIG. 2, the content region 210 of the user interface 200 generally provides the functionality for applications that can be used or accessed with the terminal device. Applications can be stored in or downloaded to the terminal device. In one embodiment, examples of these applications can include a camera, composer, gallery, media player, note pad or paint brush application, which might also be referred to as Java applications. The applications could also be more visual oriented applications, such as for example, radio, TV, games, and World Wide Web (WWW) browser. In alternate embodiments, any suitable application that can be downloaded and stored on a terminal device can be used.

By selecting or activating the Content 210 icon or the user interface 200 shown in FIG. 2, the user of the terminal can be presented with a "Browse Content" display 400 shown in FIG. 4. Some of the main features of the content page or window 410 include the ability to browse, view and create images, drawings, presentations, collections or documents. Audio and video can be played (title, stream, broadcast) can be viewed. Games can be played, Internet pages displayed and presentations displayed. The user can maintain, archive, synchronize and backup content. The user can also send, share and receive content.

In one embodiment, the content page 410 of FIG. 4 interacts with or relates to the users region 220 of FIG. 2. Thus, in FIG. 4, the browse content window 400 includes a users window 420 that displays the functionality and features of the users region 220 of FIG. 2. The users section 420 can include a contact list or people, indicate users located online as well as their identity, as well as for example, a user identification or identifier (e.g. nickname and/or personal image, icon, or avatar). Indicator icon 422 may be used for showing the preferred mean of communication for a contact at that time and the icon 424 may display the contact's online status. In alternate embodiments, any suitable indicators or icons can be used to present a desired functionality associated with a contact. The users are generally identified from a previously stored contact list as will be described below.

The content page or window 400 also interacts with and relates to the Tasks region 230 of FIG. 2. Thus, in FIG. 4, the features of the Tasks regions, calendaring services, call log, etc., are displayed in window 430. This window 430 can include the time and date, as well as schedules and appointment periods or times.

The content page 400 also displays proximity services related to the Environment region 250 of FIG. 2. Generally, the contact list can again be used to identify possible contacts, events, objects (e.g. file downloads) and services (e.g. printing) in a certain region or geographical area. Also, in this window 440 of FIG. 4, a physical location of the terminal as well as other context and proximity related information can be displayed, such as the name of the current location for example "Home (Tampere").

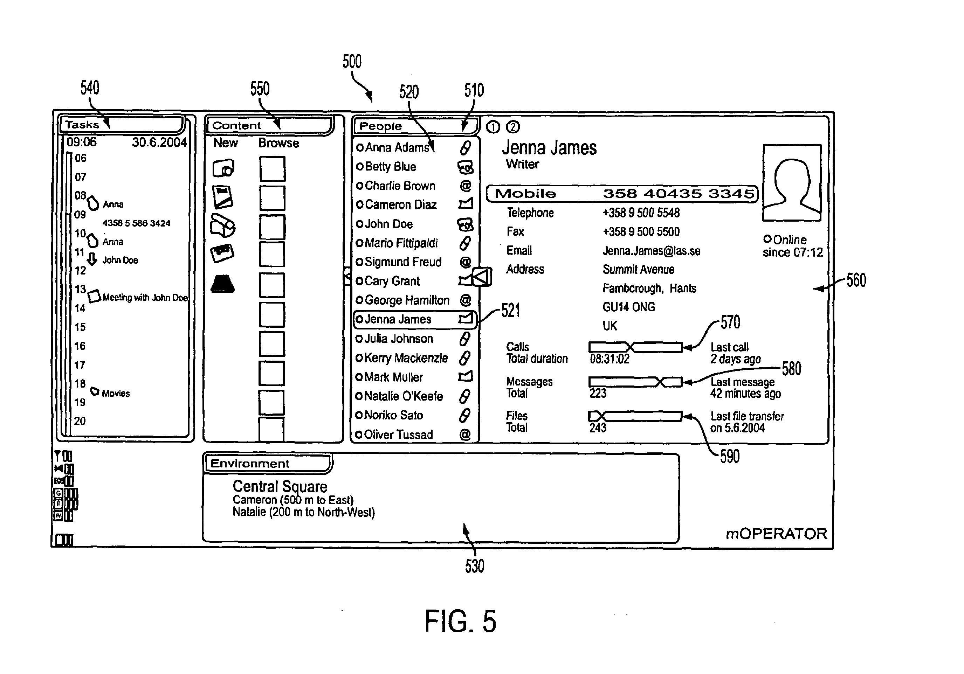

Referring to FIG. 5, the user has selected the "Users" region 220 of FIG. 2. Thus, in FIG. 5, the Users window 500 is more predominantly displayed relative to windows 530, 540 and 550. The users region 220, of FIG. 2 generally provides the user of the terminal with a launch pad for social interaction. Using a contact list stored in the terminal device, the Users window 500 of FIG. 5 can display whether any users from the contact list are online, for example, as well as provide their identities. The area 510 generally displays the number of users that are online, the users being identified from the contact list 520. The list 520 can include contact data and information as desired. In one embodiment as shown in FIG. 5, the region 560 may provide detailed information about the selected contact. For example, in the list 520, the contact name "Jenna James" (521) is selected by the user using a cursor or touch selection (tapping), for example. This activation or selection can highlight the contact identifier 521 and cause the details associated with the contact 521 to be displayed in an area 560. In addition to personal information, such as contact details, area 560 may also display, in one embodiment, the time, date and duration 570 of the last time a call or communication occurred with the contact 521, together with a total duration of all calls. The number of messages with the contact 521 may also be displayed in 580, as well as when the last message occurred. In area 590, an indication of files transferred with the contact 521 is shown, as well as the date of the last file transfer. It may display also available applications that facilitate conversations between users. These "conversation" or "interaction" applications can include for example, rich call, push-to-talk or chat applications. In alternate embodiments, any suitable application that facilitates conversation type communication between users can be used. The application could also include messaging applications, such as for example, short messaging service (SMS), multi media messaging service (MMS), instant messaging (IM), email and SAM.

As shown in FIG. 5, in one embodiment, the user window 500 relates to the content region 210 of FIG. 2 and provides a display region 550 for displaying content that is shared or received recently from the selected contact. Region 550 can also provide means for creating new or editing old content in collaboration with the selected content, as well as the possibility to start a multi-player game session.

Referring to FIG. 5, the users window 500 also relates to the calendaring service and provides a listing of time occupation, such as for example appointments and meetings. The Users window 500 could also include a communications journal 540 that interacts with the tasks region 230 of FIG. 2. in such a way that the recent calls, missed calls etc. between the user and the selected contact are displayed in the task (calendar) view 540. In addition, indicators, such as 570, 580, and 590, can be used for providing an overview of the social interaction (e.g. calls, messages and file transfers) between the owner of the terminal and the selected contact. In alternate embodiments, any suitable indicators or icons can be used to show any interaction between the user and a contact that is capable of being displayed on a terminal device.

List view 560 could also provide a link to the mobile weblog (blog) of the selected contact. Activating that link would open the web browser in the selected web address in the content area 550.

The user window 500 also relates to the environment region 250 of FIG. 2 by displaying, in region 530, the presence and/or location of people. For example, as shown in FIG. 5, the environment region 530 of page 500 indicates the location of the terminal ("Central Square") as well as the presence of two people ("Cameron" and "Natalie") from the user's contact list nearby the user..

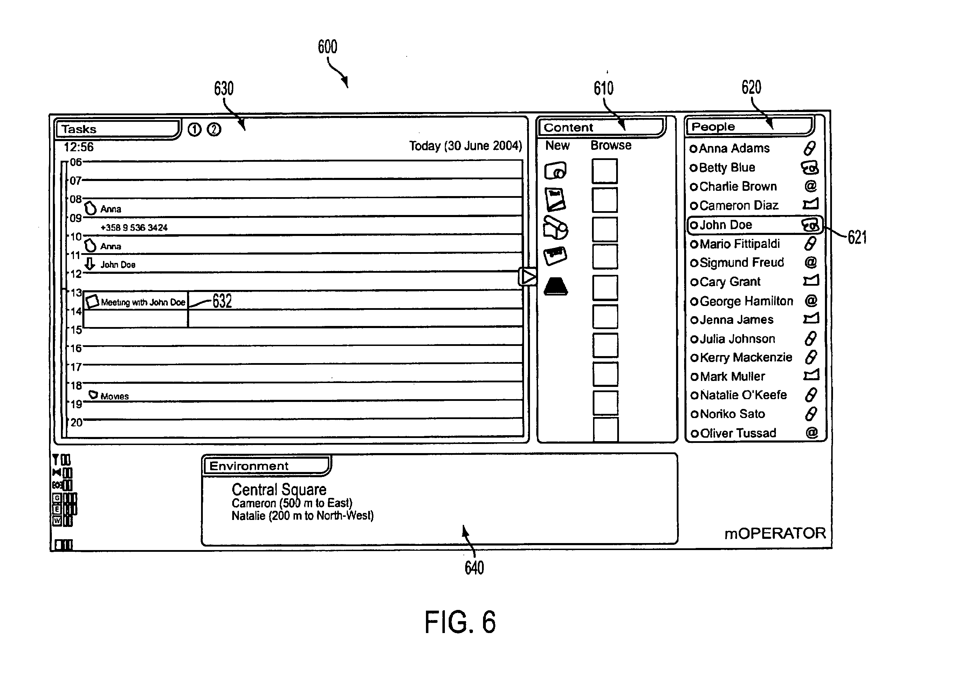

The tasks region 230 of FIG. 2 generally provides calendar services as well as other services that contain temporal dimension e.g. call log. These service or features are shown in the tasks page 600 illustrated in FIG. 6. The basic calendaring applications are shown in the display region 630 which is now the prominent window displayed on the user interface. These services can include for example, time and date, and a daily calendar divided by time segments or periods. The calendar 630 can include events 632 shared by users. This means that the user can see the calendar information of the selected subject(s) and make an appointment that is visible to all the associated persons. If calendars of several people are visible at the same time in 630, the associated contacts in the region 620 will be highlighted in such a way (e.g. color-coding or icon) that the user can recognize who is the owner of each event. For example, in the list 620, the user has selected "John Doe". In the calendar view 630, a meeting with John Doe in region 632 is highlighted. Also, the region 610 could then display content objects related to the meeting with John Doe. To-do lists can also be shared.

The tasks page 600 might also include a journal and phone log and communication history as superimposed over the calendar region 630. Depending on the region 630 settings it may contain different kind of temporal data related to, e.g., calendar events, to-do events, application usage history, and call logs. The content region 610 of the tasks display 600 generally displays the content related to currently selected event of the region 630..

A feature of the tasks page 600 is to display the calendar 630 as a timeline UI component for other regions. For example, referring to FIGS. 4 and 5, the task region 430 and 540, respectively, is shown as a time line component on a portion of the page. Fig 4. shows an example where the region 410 contains a collection of images and the timeline component 430 displays indicators (small dots) when these images are taken and the user may see who the visible collection is spanned. On the other hand, the user may change the length of the timeline and by doing so interact with the collection increasing/decreasing the number of images

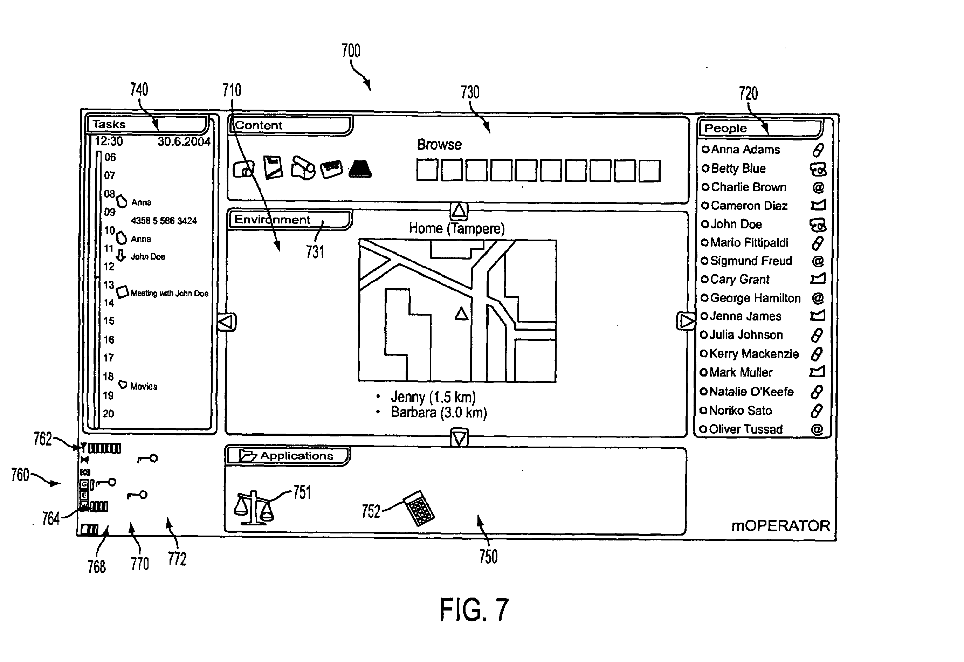

The environment region 250 of FIG. 2 generally provides access to proximity and location based services and information. Services may be related to, e.g., wayfinding; gaming; advertising; printing; and public announcements and annotations; and transportation (timetables). As shown in FIG. 7, the environment page 700, generally provides navigation and location information in region 710, the more predominant window on the screen. Also included in region 710 can be navigation aids, maps and landmarks and distances between contacts or objects of interest. For example, in the map region 710, "Jenny" is identified as being 1.5 km from the location of the terminal while "Barbara" is 3.0 km away. Their respective positions can be represented by icons or text on the map region 710. The location determination is generally a function of the position locating services and functionality of the terminal device. For example, it may be a feature of the terminal device to use a global positioning service ("GPS") to identify a geographical location of the terminal device. By interacting with a service provider associated with the terminal device, the user can identify contacts from 720, for which geographical locations or positions are desired. This information could then be determined and transmitted back to the terminal device. In alternate embodiments any suitable positioning or location device or service can be used then will provide a location of one terminal device to another terminal device.

The background area 760 of the display 700 can be used to display information about the terminal. Signal strengths can be indicated as bars 762. The signal strength indicators may also indicate the security level of the connection. For example, if the connection is encrypted an indicator 772 is displayed on the right side of the bar. Another option is that that if the connection is with someone listed in the contact list, a small "buddy indicator" 770 is displayed. Traffic to and from the terminal can be shown as bars 764. In one embodiment the indicators 764 could be shown with color coding, where no traffic is indicated as, e.g., unfilled rectangle 764. Although rectangles are shown, any suitable type of indicator, including size or shape, can be used.

In one embodiment, battery strength indicators 768 can also be provided.

Applications that do not necessarily relate directly to other regions shown in FIG. 2, may also be found in the Applications region 240. These applications could include for example, currency and temperature converters, a calculator application, or third party applications. For example, in FIG. 7, some other applications are illustrated as icons 751 and 752 in window 750.

The user interface of the present invention can also be adapted to be used with gestures, such as performing a gesture and using 2D/3D acceleration sensors for sensing movement. Then an action is performed based on the recognized gesture (e.g. moving terminal up direction and then shaking it would navigate to "Browse content" region) and voice commands.

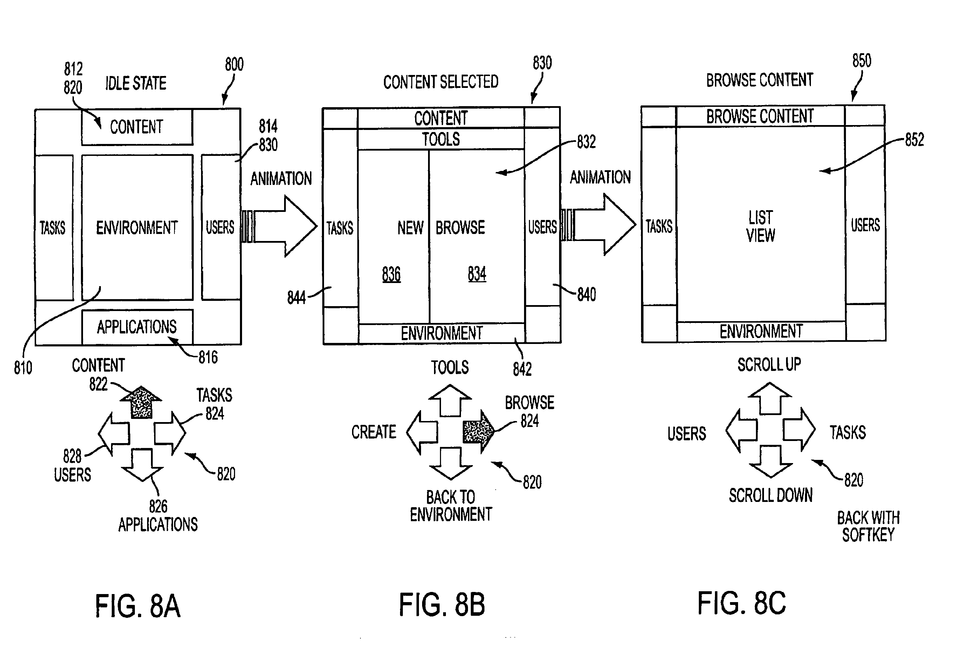

One example of interaction with a user interface incorporating features of the present invention is illustrated in FIGS. 8A-8C. A user interface 800 is shown in an idle state in FIG. 8A. The user interface comprises a central "Environment" region 810. Surrounding the environment region 810 are four other regions, Content 812, Users 814, Applications 816 and Tasks 818. A 5-way joystick 820, with one soft key is used as the selection and input device. As illustrated in FIG. 8A, the user selects the "CONTENT" region 812 by selecting and activating key 822.

The content page 830 is then displayed as illustrated in FIG. 8B. The content page 830 comprises a center section 832 that allows a user to create new content object; start application, or browse existing applications or content objects. Content object may be, e.g., a movie, image, game, slideshow, document, web page, audio file, spreadsheet, or a collection of objects. The user can either browse 834 for existing applications or content objects; or select a "new" 836 and create a new content object or start an application that can be uploaded or downloaded to the terminal. Surrounding the center section 832 are a Tools region 838, a Users region 840, Environment region 842 and a Tasks region 844. The tools region 838 generally comprises features for searching, archiving, editing, synchronizing and backing up information.

In FIG. 8B, the user uses the joystick keys 820 to select the "Browse" function 834 by activating key 824.

The "Browse Content" display 850 is illustrated in FIG. 8C. This would be the main screen on the display of the user interface in this mode. Here, the center section 852 displays the available programs and applications that can be selected. The buttons 822 and 826 are re-programmed or reassigned the scroll-up and scroll-down functionalities, the button 828 is used for moving to Tasks region 844 and the button 824 is used for moving to Users region 852.

Referring to FIG. 9, another embodiment of a visual layout of a user interface incorporating features of the present invention is illustrated. In this idle state, the Environment region 910 is the main or predominant window, highlighted as a complete circle in the center portion of the display area. The secondary application or windows 912, 914, 916 and 918 are shown as portions of circles, in the corner of the display. The user interface 900 shown in FIG. 9, is generally adapted to allow frequently performed tasks to be carried out with one hand. Thus, while a user is for example holding a terminal that has a user interface 340, the user can interact with the user interface by acting on a touch screen display on the terminal. In one embodiment the interaction could be carried out using a stylus. Alternatively, any suitable means for interacting with a touch screen display can be used.

In another embodiment, a rotator device can be used to move a cursor or other activator or selection device about the user interface 900 to the different regions 912-918. The rotator could comprise for example, a jog wheel with rocker keys. In a further embodiment, a joystick on the terminal could be used to move the cursor or other activation or selection device about the screen of the user interface 900. Generally, a 5-way joystick would be required to be able to select and activate each of the regions 912-918. In an alternate embodiment, keys or buttons 320-326 of FIG. 3C could be used to manipulate a cursor about the display of the user interface. Also, if the display of the user interface is touch sensitive, a finger or other pointing device, such as stylus 327 of FIG. 3A, could be used to make the selection.

There are five regions illustrated in FIG. 9. A central region 910, surrounded by regions 912, 914, 916 and 918 in the corners of the display. The center region 910 can be a circle, while each corner region 912-918 is a semi circle portion. In alternate embodiments, any suitable shapes can be used. Also, number of regions may vary, e.g., in some cases region 914 may be missing. As will be discussed below, the user interface of the present invention can scale to any size or orientation of display screen. Thus, while the regions 912-918 can comprise complete circles in one embodiment, in a smaller embodiment, only a partial portion of the circle or other geometric shape might be present. In one embodiment the size of the region may reflect the number of objects that are available for user interaction.

The central region 910 shown in FIG. 9 can comprise the Environment region. The time, date, proximity and location related information could be displayed in this region. The proximity information can relate to or interface with the Content region 918 and indicate that some content-related object is available now, such as for example a new ringing tone as indicated by the icon 911. It can also relate to or interface with the Tasks region 912 and indicate that some action that is, e.g., valid for a certain time period can be performed here. For example, the region 910 can relate to or interface with an action illustrated by the icon 908 "Vote: Best slogan!" which is a public poll where the use has a possibility to vote for the best slogan for some purpose. The region 910 can also relate to or interface with the Contacts region 916 to identify that a contact is nearby, as illustrated by the icon 909 that John is less than 10m away. The region 910 can also inform a user about services, such as a free wi-fi hotspot or printing service.

The "MY TASKS" region 912 generally provides calendar and other related services. In one embodiment, the MY TASKS region 912 could include additional icons or objects 913 that indicate for example, a missed call that requires a return call or an indicator for an upcoming event. In alternate embodiments any suitable number of indicators can be utilized.

The "APPLICATIONS" region 916 shown in FIG. 9 generally provides the user with information related to Applications stored in the terminal device. Generally, a category of applications can be stored and displayed, including for example, games.

In the "MY CONTACTS" region 916 shown in FIG. 9, contact list information can be stored and accessed. Information on conversations and messages between contacts can be accessed as well as information and data persons for who to share some content (e.g. images).

The "MY CONTENT" region 918 shown in FIG. 9 generally allows a user to create, edit, annotate information and data, documents, images, audio, video and applications. As shown in FIG. 9, the MY CONTENT region 918 can also include additional icons or objects 920 that allow a user to access additional functions related to the MY CONTENT region. These could include for example, changing and filtering a view.

The battery strength, signal strength and other operational aspects of the terminal device can be displayed for example in region 930.

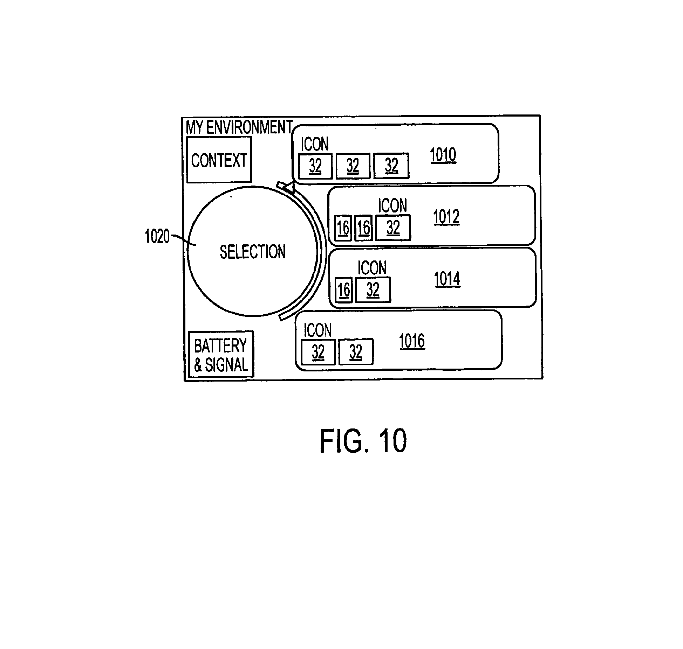

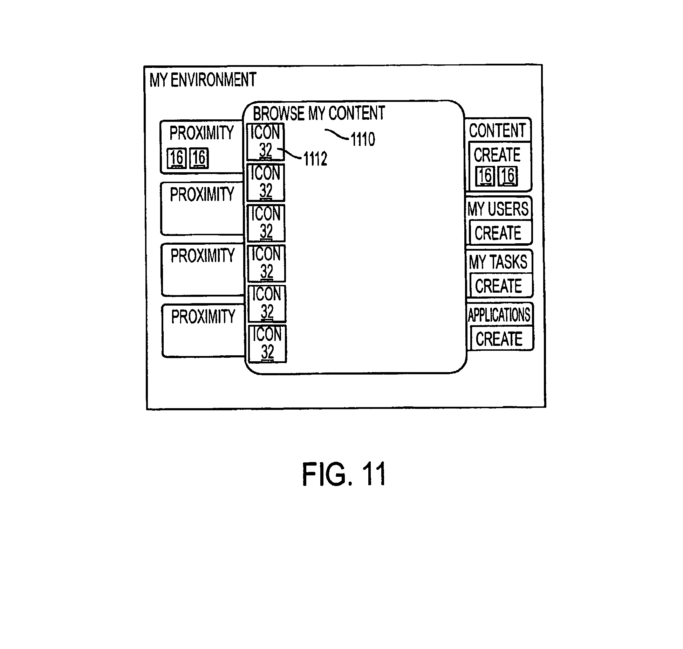

FIGS. 10 and 11 illustrate other embodiments of a user interface incorporating features of the present invention where for example, rectangular regions in other window locations are used.

In FIG. 10, the Content, Tasks, Applications, and Contacts are rectangular regions arranged in a vertical hierarchy. A round selection device 1020 allows the user to move between and/or select a desired region. In FIG. 11, the Content region 1110 has been selected and is displayed in 1110. The icons 1112 are applications that can be selected.

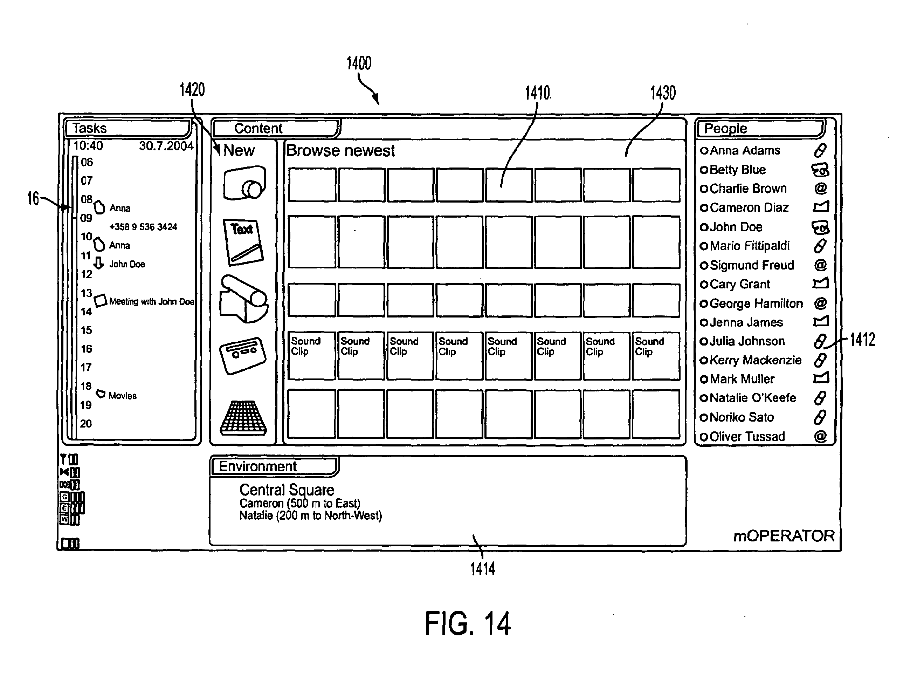

One example of navigation in a user interface incorporating features of the present invention is illustrated with respect to FIGS. 7, 14 and 15. The home or idle screen 700 is shown in FIG. 7. If for example, a user wishes to access a camera application of the associated terminal device, and the camera application is displayed as icon 731 in the Content region 730 of FIG. 7, the user selects the Content region 730 of FIG. 7. This results in a display 1400, such as that shown in FIG. 14, where the Content region 730 of FIG. 7 is the predominant region 1410 in the screen 1400. The Content region 1410 allows the user to choose between creating "New" content or application use sessions 1420 or to browse existing content or applications 1430 stored on the terminal device. To activate the camera application 1421 in the "New" region 1420, the user can select the icon 1421. This enables the cameral application and provides, via the display, the functionality of the camera.

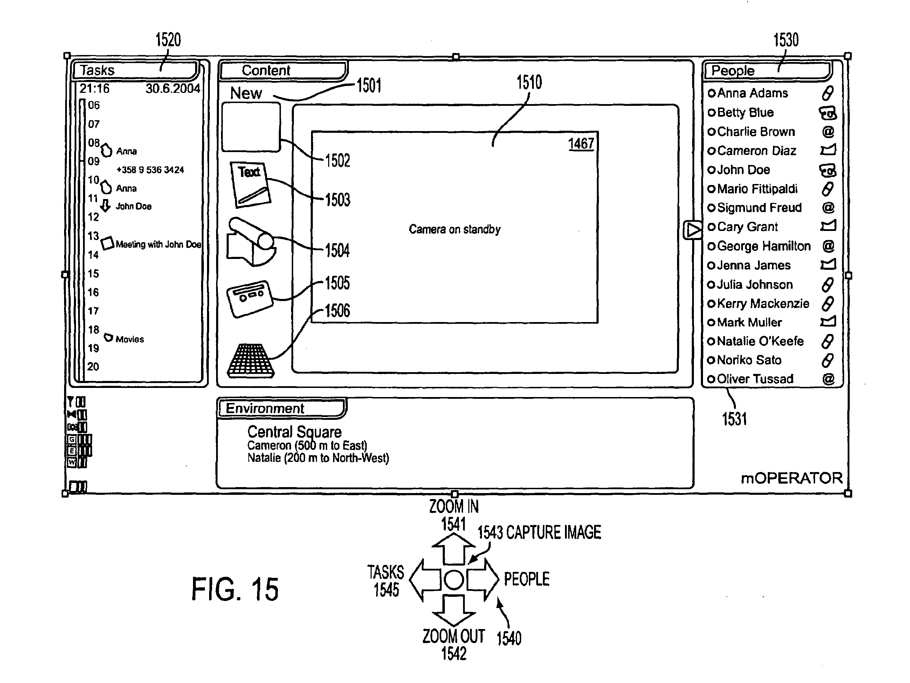

As shown in FIG. 15, the camera application can interact with the Tasks region 1520. For example, a user may desire to do a timed image capture with a contact from the contact list 1530. Alternatively the user could schedule a calendar event containing a captured image, or even attach an image to an existing event. The user can also select people from the contact list 1530 with whom to share a captured image. In one embodiment, the user could select the contact name or an associated icon in order to share the image. Alternatively, or in conjunction with the above, the user might select the contact or icon 1531 to initiate a conversation or messaging dialogue with the contact once the image is captured and shared.

Referring to FIGS. 7, 14, and 18, one embodiment of navigating features, function and applications of a user interface incorporating features of the present invention will be described. The display 700 of FIG. 7 is generally referred to as the idle state and presents a general overview of the contents and status of the terminal device. As shown in FIG. 7, the user is presented, via the user interface, with a display that allows access to each of the regions Content 730, People 720, Applications 750 and Tasks 740, that generally defines the functionality of the terminal device. To enter or access the content region 730, the user activates the region 730 by manipulating a cursor and selecting the region 730. Upon selection of the region 730, the region 730 expands to become a predominant region on the display as illustrated in FIG. 14. Here, the contents of the content region 1410 are displayed. In one embodiment, this is illustrated by the content region 730 expanding or shifting downward, displacing the environment region 710. The environment region 710 can replace the applications region 750 to become a secondary region in relation to the content region1410, as the environment region 710 has a relationship with the content region 730. The user then has the ability to select and activate any one of the functions or applications in the New region 1420 or Browse Newest region 1430. This could occur by the user selecting and "clicking" on a displayed icon or moving the cursor to a specific icon. For example, if an image 1405 is selected, as shown in FIG. 4, a larger version of the image is shown at 401. The contacts 402, 404, 406 and 408 from the contact list 420 with whom the image is shared, are highlighted in some fashion.

If, referring to FIG. 14, the user desires to enter another region, by moving a cursor left, right or down, or tapping on the respective areas or regions, the user could select one of the regions 1412, 1414 and 1416, enabling that selected region to become the predominant region.

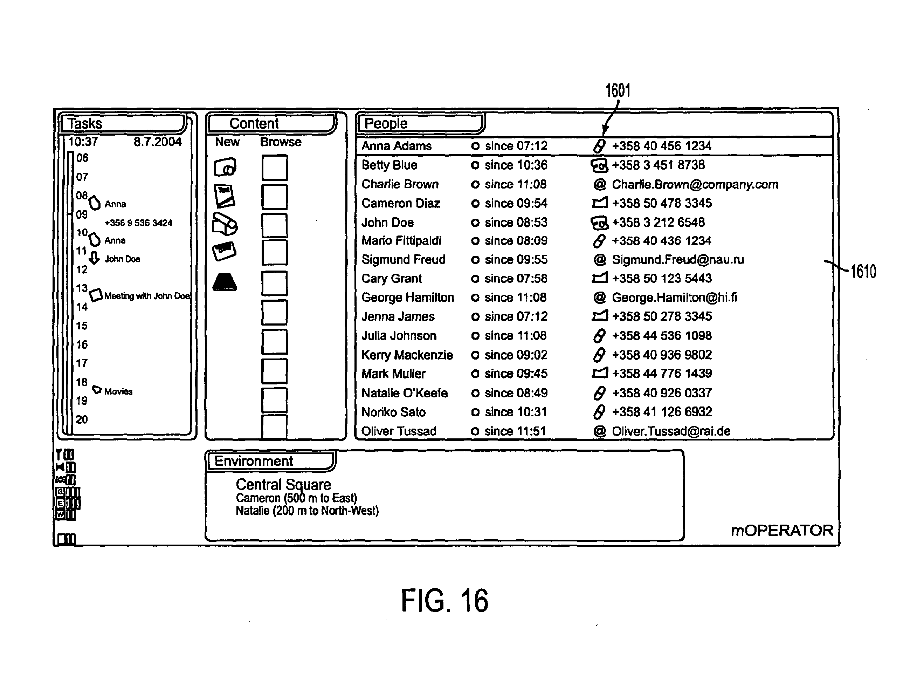

If, from the idle state screen 700 of FIG. 7, the People or Contact section 720 is selected, that region becomes the predominant region on the interface as shown in FIG. 16. More details on each contact are displayed in region 1610. By selecting a specific contact, in one embodiment further details on the contact can be displayed, as for example shown in FIG. 5. In one embodiment, a feature of the user interface can be to establish a communication line such as telephone connection with a particular contact, when that contact is selected. The icons displayed along the column 1601 in FIG. 16 can inform the user if such a feature is available or enabled.

Referring to FIG. 6, the Tasks region 740 of FIG. 7 has been selected or activated. A more detailed calendar 630 is displayed. The level of detail associated with the calendar presentation can be expanded or contracted as desired.

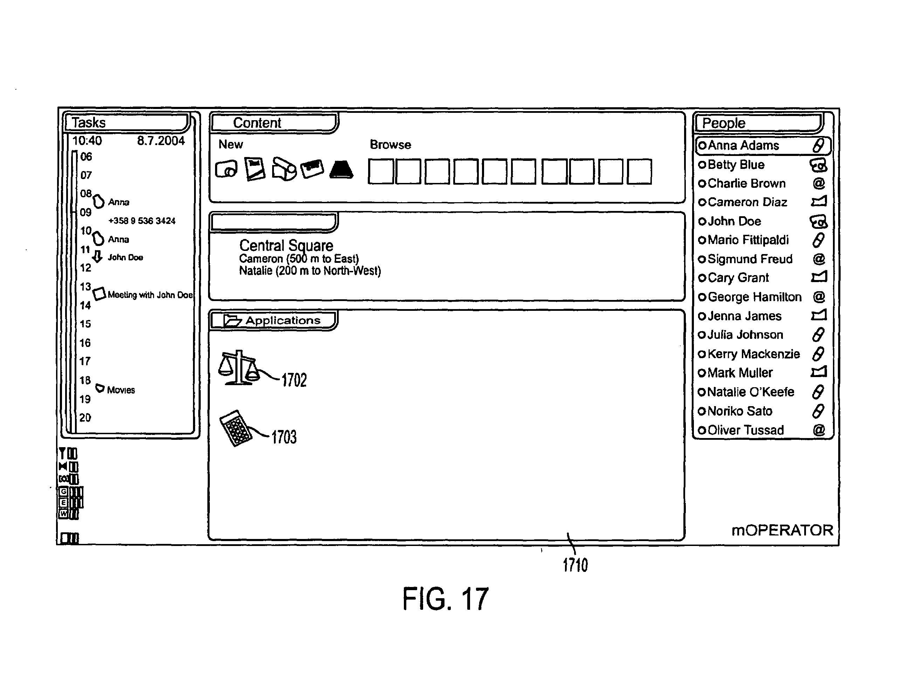

In FIG. 17, the Applications region 750 of FIG. 7 is selected. The activation expands the Applications region so it is the predominant region 1710 in the user interface. The user can then browse through and select any one of the displayed applications.

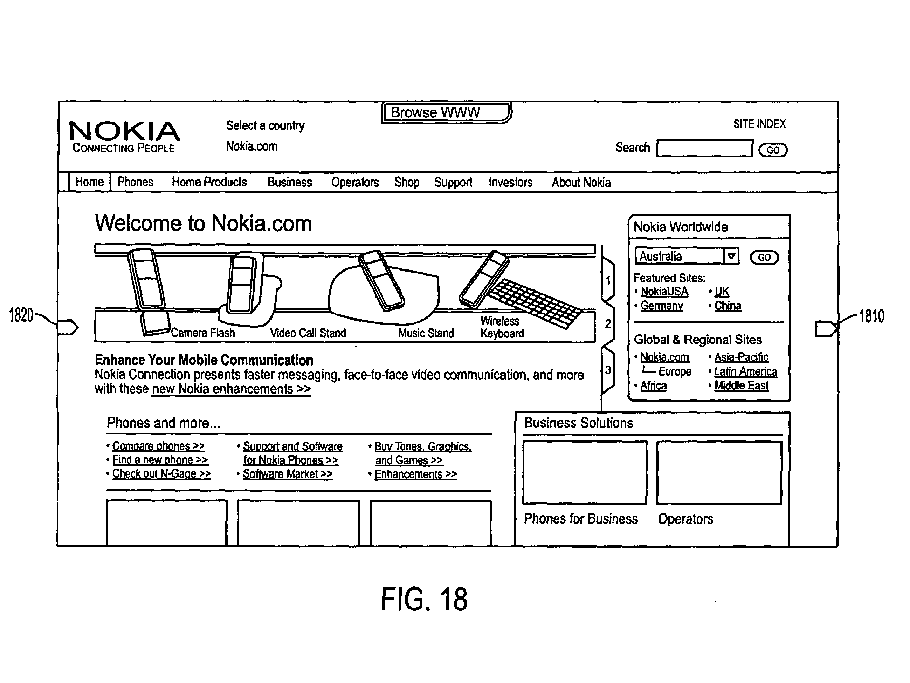

Referring to FIG. 18, in one embodiment, the user interface incorporating features of the present invention can be used to navigate the world wide wed ("WWW"), or the Internet. In the Browse Content mode referred to with respect to FIG. 14, the user selects the WWW application. The user can expand the interface to view the www browser in a full screen mode as illustrated in FIG. 18. For example, a soft key can be used to toggle between a normal view and an expanded view. In FIG. 18, the Nokia.com web page is illustrated. The secondary regions are identified by the "P" icon 1810 for contacts; the "T" icon 1820 for the tasks region; and the "E" icon 1830 (in the middle of the screen on the bottom) for "Environment".

As shown in FIG. 15, the control device 1540 can be adapted or configured to allow the user to use the control device to activate zoom feature 1541, 1542 when viewing the image. The control device 1540 could also be adapted to allow the user to activate a key 1543 of the device 1540 to capture the image. Positions or buttons 1544 and 1545 could be adapted to allow the user to select the People region 1530 and Task regions 1520, respectively. In a similar fashion the display of the user interface and control device can be adapted to display and control the functionality of each application 1502-1506, illustrated in the "New" region 1501 of FIG. 15. Some of the possible applications in the gallery of content 1501 shown in FIG. 15 can include for example, a camera or image recorder or photo application 1502, a text application editor or creator program 1503, a video application 1504, an audio application 1505 and a game application 1506. In alternate embodiments any suitable application or program that is capable of being stored or downloaded to the terminal device can be part of the content of the terminal device.

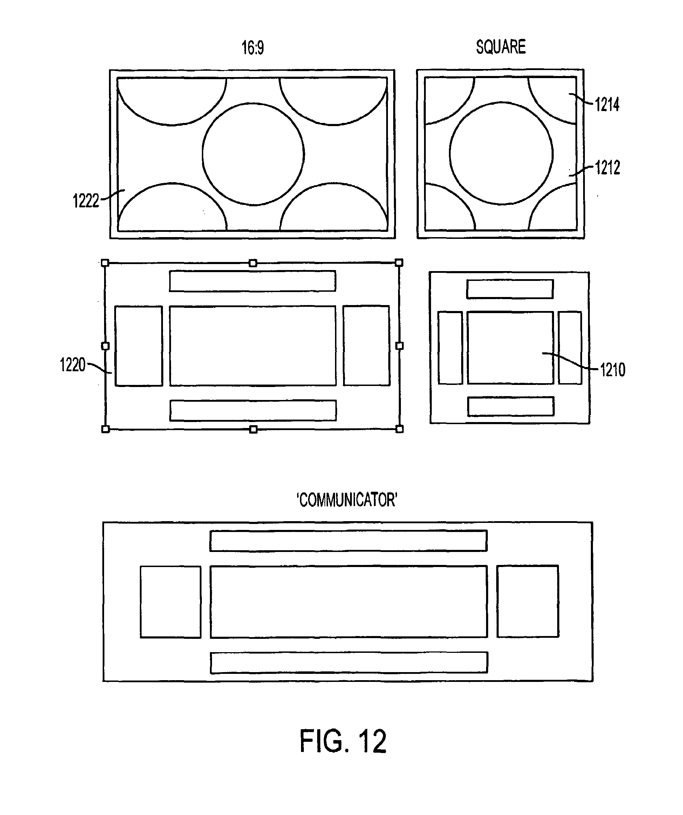

In one embodiment, the present invention generally makes use of XML-based user interface description language. As illustrated in FIG. 12, the use of XML-based description language allows for scaling the user interface for different screen sizes and shapes. For example, for a square style display screen 1210, the user interface is scaled to fit in a square relationship as shown in 1212. In the square display 1212, the corners 1214 are only a portion of a semi-circle as the object. In a rectangular shaped screen 1220, such as a 16:9 aspect display, the display 1222 has substantially complete semi-circles 1224 in the corner regions as the object. The objects 1214 and 1224 level of detail will depend on the available screen size. Thus, for example, a small screen list item may use one line, but on a larger screen, four lines could be used. The number of lines used will depend upon the screen size. Generally, the regions and objects of the user interface of the present invention can be of any suitable size and shape. The user interface could also be made to be more than two dimensional, and can include 2.5 and 3 dimensional views.

It is a feature of the present invention to adapt the screen orientation (portrait/landscape) on a non-square screen and use one layout definition to adapt to different screen sizes. By changing the layout and properties of user interface widgets or objects from the user interface description files, there is a separation of the logic and presentation. The application does not need to rebuild to change the layout and each user widget or object adapts its content according to the given size if necessary.

The user interface description language generally comprises widget or object declaration and layout information. This supports multiple views within a same application. For example, grid layout algorithms, similar to HTML tables, may be used and nested grids can be used to achieve finer control over layout and positioning. In one embodiment, the user interface incorporating features of the present invention comprises a zoomable user interface ("ZUI"). A ZUI does not use windows. Rather, it comprises a canvas, where the images on the display are drawn to fit a size of the display. Thus, the level of detail of the use interface screen on the display depends upon the level of zoom. Navigating in a zoomable user interface generally occurs by zooming in and out and panning the viewpoint. Thus, in this embodiment, the ZUI has only regions and not windows.

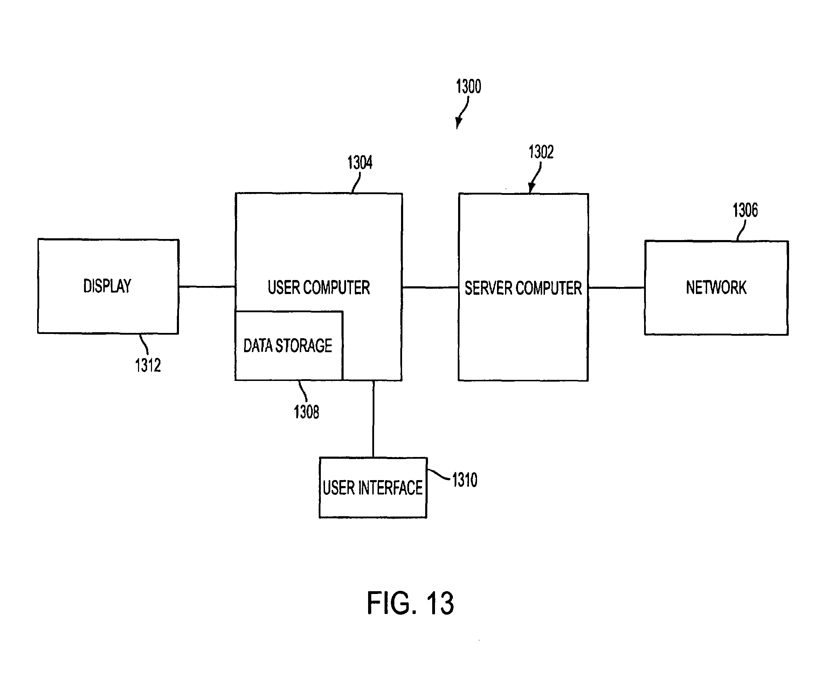

The present invention may also include software and computer programs incorporating the process steps and instructions described above that are executed in different computers. In the preferred embodiment, the computers are connected to the Internet. Fig. 13 is a block diagram of one embodiment of a typical apparatus incorporating features of the present invention that may be used to practice the present invention. As shown, a computer system 1300 may be linked to another computer system 1302, such that the computers 1302 and 1304 are capable of sending information to each other and receiving information from each other. In one embodiment, computer system 1302 could include a server computer adapted to communicate with a network 1304, such as for example, the Internet. In an alternate embodiment, the system 1300 could comprise a peer-to-peer ("P2P") network, where each computer forms a network node and acts as both client and server at the same time. Computer systems 1302 and 1304 can be linked together in any conventional manner including a modem, hard wire connection, or fiber optic link. Generally, information can be made available to both computer systems 1302 and 1304 using a communication protocol typically sent over a communication channel or through a dial-up connection on ISDN line. Computers 1302 and 1304 are generally adapted to utilize program storage devices embodying machine readable program source code that is adapted to cause the computers 1302 and 1304 to perform the method steps of the present invention. The program storage devices incorporating features of the present invention may be devised, made and used as a component of a machine utilizing optics, magnetic properties and/or electronics to perform the procedures and methods of the present invention. In alternate embodiments, the program storage devices may include magnetic media such as a diskette or computer hard drive, which is readable and executable by a computer. In other alternate embodiments, the program storage devices could include optical disks, read-only-memory ("ROM") floppy disks and semiconductor materials and chips.

Computer systems 1302 and 1304 may also include a microprocessor for executing stored programs. Computer 1300 may include a data storage device 1306 on its program storage device for the storage of information and data. The computer program or software incorporating the processes and method steps incorporating features of the present invention may be stored in one or more computers 1302 and 1304 on an otherwise conventional program storage device. In one embodiment, computers 1302 and 1304 may include a user interface 1307, and a display interface 1308 from which features of the present invention can be accessed. The user interface 1307 and the display interface 1308 can be adapted to allow the input of queries and commands to the system, as well as present the results of the commands and queries.

It should be understood that the foregoing description is only illustrative of the invention. Various alternatives and modifications can be devised by those skilled in the art without departing from the invention. Accordingly, the present invention is intended to embrace all such alternatives, modifications and variances that fall within the scope of the appended claims.

## Claims

1. A terminal device (100) for providing a graphical user interface, the terminal device comprising:
a display screen (107);
a user input device; (106)
a processor (101) arranged to display information on the display screen, the information comprising a plurality of regions, each region providing information related to a contents of the terminal and a status of the terminal, the processor being arranged to display:
a primary region;
at least one secondary region, the primary region being displayed in a more predominant manner on the graphical user interface than the at least one secondary region; and
the name of the current location of the terminal device (100).

2. A terminal device as claimed in claim 1, wherein the processor is arranged to display the name of the current location of the terminal device in the primary region (910).

3. A terminal device as claimed in claim 1 or claim 2, wherein the processor is arranged to display the name of the current location of the terminal device in a secondary region.

4. A terminal device as claimed in claim 1 or claim 2, wherein the processor is arranged to display the name of the current location of the terminal device when the user interface is in an idle mode.

5. A terminal device as claimed in any preceding claim, wherein the processor is arranged to display the name of the current location of the terminal device when the user interface is not in an idle mode.

6. A method of operating a terminal device (100) for providing a graphical user interface, the terminal device comprising:
a display screen (107);
a user input device; (106)
a processor (101), the method comprising:
displaying information on the display screen, the information comprising a plurality of regions, each region providing information related to a contents of the terminal and a status of the terminal,
displaying a primary region;
displaying at least one secondary region, the primary region being displayed in a more predominant manner on the graphical user interface than the at least one secondary region; and
displaying the name of the current location of the terminal device (100).

7. A method as claimed in claim 6, comprising displaying the name of the current location of the terminal device in the primary region (910).

8. A method as claimed in claim 6 or claim 7, comprising displaying the name of the current location of the terminal device in a secondary region.

9. A method as claimed in any of claims 6 to 8, comprising displaying the name of the current location of the terminal device when the user interface is in an idle mode.

10. A method as claimed in any of claims 6 to 9, comprising displaying the name of the current location of the terminal device when the user interface is not in an idle mode.
